# EUROPEAN PATENT APPLICATION

(11) **EP 1 139 197 A2**
(43) Date of publication of application: **04.10.2001**
(21) Application number: 01108037.1
(22) Date of filing: 29.03.2001
(51) Int. Cl.: G06F 1/00

(54) **Protection of a digital content distribution system**

(30) Priority: 30.03.2000 JP 2000092721; 26.02.2001 JP 2001050245
(71) Applicant: Sharp Kabushiki Kaisha, Osaka-shi Osaka (JP)
(72) Inventor: Takita, Yukiko, Ikoma-shi, Nara (JP)
(74) Representative: MÜLLER & HOFFMANN Patentanwälte

(57) **Abstract**

A content distribution system (3) is provided in a pseudo closed space (4) like public facilities or establishments. The content distribution system includes a content distribution apparatus (1) distributing content (5) formed of digital information, and a plurality of users present within the pseudo closed space use respective portable content reception apparatuses (2) to receive and reproduce the content. The content distribution apparatus also distributes a signal for enabling the content to be reproduced continuously by the content reception apparatus. Even if the content reception apparatus has received the content, it cannot reproduce the content when its user leaves the pseudo closed space and accordingly the reception apparatus cannot receive that signal from the content distribution apparatus.

## Description

### BACKGROUND OF THE INVENTION

### Field of the Invention

The present invention relates to a content distribution system for distributing information in digital form such as electronic books and magazines (hereinafter referred to as content), a content reception apparatus, a content distribution apparatus, a content reception method, a content distribution method, a machine-readable recording medium on which a content reception program is recorded, a machine-readable recording medium on which a content distribution program is recorded, and a program product.

### Description of the Background Art

In recent years, information described in books and magazines as paper media is more frequently converted into digital data and then downloaded into portable information terminals by means of the Internet, satellite broadcasting, digital content vending machines and the like, and the digital data is accordingly used in the form of electronic books and mobile magazines.

In public establishments or facilities like banks and beauty parlors, paper media books and magazines are provided for customers or users to read in a waiting time. In airplanes, such books and magazines are served to passengers as one of services to them. In such public facilities where the same books and magazines are utilized by a plurality of users, each user takes any book or magazine from a predetermined place to read it, and then returns, after the user finishes reading, the book or magazine by his or herself to the predetermined place for other users to read. Personnel in charge may deliver books and magazines to users and thereafter collect them from the users.

When books and magazines that have conventionally been provided to users in the form of paper media in public facilities are supplied to users in the form of digital media by being downloaded as digital data into portable information terminals owned by the users, the supplied digital data are stored in memory devices like memory and hard disk within the portable information terminals. If a user carrying such a portable information terminal exits from the facility, information which must be supplied to be utilized within the facility only is accordingly taken out by the user. It means that the user substantially duplicates information contained in a book or magazine without permission, resulting in a problem in terms of copyright.

### SUMMARY OF THE INVENTION

One object of the present invention is to provide a content distribution system preventing content from being taken out without permission, a content reception apparatus, a content distribution apparatus, a content reception method, a content distribution method, a machine-readable recording medium on which a content reception program is recorded, a machine-readable recording medium on which a content distribution program is recorded, and a program product.

In order to achieve the object above, according to one aspect of the invention, a content distribution system includes at least one content reception apparatus receiving and reproducing distributed content and a content distribution apparatus distributing the content. The content distribution apparatus distributes a continuation signal for enabling the content to be reproduced continuously. The content reception apparatus cannot reproduce the content when the reception apparatus cannot receive the continuation signal.

The content reception apparatus can reproduce the content received from the content distribution apparatus as long as the reception apparatus can receive the continuation signal and cannot reproduce the content while it cannot receive the continuation signal. Therefore, a content reception apparatus in the state that it cannot receive the continuation signal cannot reproduce content even if it has received the content. In other words, the content reception apparatus which enters a state where content reproduction is not permitted accordingly cannot reproduce the content. It is thus possible to prevent the content from being taken out without permission.

The content reception apparatus presents the reproduced content. Then, a user of the content reception apparatus can confirm details of the content presented thereby.

The content distribution apparatus distributes the continuation signal at predetermined intervals. When the content reception apparatus cannot receive the continuation signal in this interval, the reception apparatus cannot reproduce the content.

The content distribution apparatus further has a function of managing the number of distributed contents.

The content reception apparatus reproduces the content according to reproduction procedure information indicating a procedure for reproducing the content.

The content distribution apparatus distributes the reproduction procedure information and the content reception apparatus receives and then acquires the distributed reproduction procedure information.

Each content reception apparatus can thus acquire the reproduction procedure information by receiving it from the content distribution apparatus even when each reception apparatus does not individually prepare the reproduction procedure information for reproducing the content.

Each content reception apparatus as described above may prepare the reproduction procedure information individually.

The continuation signal is distributed within a predetermined area. Therefore, the continuation signal is never distributed to the outside of the predetermined area and reproduction of the content is impossible by a content reception apparatus which moves to the outside of the predetermined area. In this way, it is possible to prevent the distributed content from being taken out of the predetermined area without permission.

The content distribution apparatus distributes the continuation signal by means of broadcasting. Then, the continuation signal can be supplied simultaneously to one or more content reception apparatuses all.

The content distribution apparatus distributes the content by means of broadcasting. Then, the content can be supplied to one or more content reception apparatuses all at the same time.

The one or more reception apparatuses each transmit an acquisition request for acquiring a desired content. When the content distribution apparatus receives the acquisition request, it distributes the desired content to a source of the request.

The content reception apparatus can accordingly receive and acquire the desired content from the content distribution apparatus.

The content distribution apparatus includes a content-specifying information distribution unit that distributes by means of broadcasting content-specifying information for specifying respective types of distributable contents. The one or more content reception apparatuses each include an information presentation unit receiving and presenting the content-specifying information distributed by the content-specifying information distribution unit, and an acquisition request transmission unit transmitting to the content distribution apparatus, an acquisition request requesting a desired content which is designated based on the presented content-specifying information.

The content reception apparatus thus receives and presents to a user the content-specifying information which is distributed in advance. Then the user can specify any desired type of content to be distributed among distributable types of contents and accordingly transmit an acquisition request for the desired content to the content distribution apparatus. In this way, the user can confirm which type of content can be distributed. Further, the user can transmit the content acquisition request after the user confirms whether the desired type of content can be distributed.

When the number of distributable contents is predetermined for each type of contents, the content distribution apparatus includes an information update unit updating the content-specifying information based on the received type of content which is requested, and the content-specifying information distribution unit distributes, when the content-specifying information is updated by the information update unit, the updated information by means of broadcasting.

The one or more content reception apparatuses each return the received content to the content distribution apparatus. The information update unit updates the content-specifying information based on the type of returned content.

When the content is distributed to the content reception apparatus or the content is returned from the content reception apparatus, the content-specifying information is updated based on the type of distributed or returned content and then the updated information is supplied simultaneously to all content reception apparatuses. All content reception apparatuses can thus obtain content-specifying information updated to the latest information without making request.

The acquisition request transmission unit transmits the acquisition request together with identification (ID) information allocated to the content reception apparatus for uniquely identifying the apparatus. The one or more content reception apparatuses each receive ID information distributed thereto and, when the received ID information and the ID information allocated to the reception apparatus match, transmit a response signal to the content distribution apparatus. The content distribution apparatus broadcasts the ID information supplied together with the acquisition request and then confirms whether it receives a response signal corresponding to the distributed ID information.

In this way, the content distribution apparatus can confirm, depending on reception of the response signal, presence of any content reception apparatus which receives and holds the distributed content.

In order to achieve the object above, a content reception apparatus according to another aspect of the invention cannot reproduce received content while it cannot receive a continuation signal for enabling the content to be reproduced continuously.

The content reception apparatus can reproduce the received content as long as it can receive the continuation signal and cannot reproduce the content while it cannot receive the continuation signal. Therefore, a content reception apparatus in the state that it cannot receive the continuation signal cannot reproduce content even if it has received and acquired the content. In other words, the content reception apparatus which enters a state where content reproduction is not permitted accordingly cannot reproduce the content. It is thus possible to prevent the content from being taken out without permission.

The content reception apparatus reproduces the received content according to a reproduction procedure information indicating a procedure for reproducing the content. The reproduction procedure information is received together with the content. The content reception apparatus can receive and acquire the reproduction procedure information without preparing the reproduction procedure information for reproducing the content.

The continuation signal can be received in a predetermined area. Reception of the continuation signal is impossible outside the predetermined area and accordingly the content reception apparatus moving to the outside of the predetermined area cannot reproduce the content. In this way, the distributed content can be prevented from being taken out of the predetermined area without permission.

The content reception apparatus includes an information presentation unit receiving and presenting content-specifying information specifying respective types of contents, and requests and receives content designated based on the content-specifying information presented by the information presentation unit.

The content reception apparatus thus receives and presents to a user the content-specifying information which is distributed in advance. Then the user can specify any desired type of content to be distributed among distributable types of contents and accordingly transmit an acquisition request for the desired content to the content distribution apparatus. In this way, the user can confirm which type of content can be distributed. Further, the user can transmit the content acquisition request after the user confirms whether the desired type of content can be distributed.

When the number of distributable contents is predetermined for each type of contents, the content-specifying information is updated based on the type of content received by the content reception apparatus. The content reception apparatus returns the received content to a distributor. The content-specifying information is updated based on the type of content returned by the content reception apparatus.

When the content is distributed to the content reception apparatus or the content is returned from the content reception apparatus, the content-specifying information is updated based on the type of distributed or returned content and then the updated information is supplied to the content reception apparatus. The content reception apparatus can thus obtain content-specifying information updated to the latest information without making request.

In order to achieve the object above, a content distribution apparatus according to still another aspect of the invention includes a content distribution unit distributing content and a continuation signal distribution unit distributing a continuation signal for enabling the content to be reproduced continuously by a receiver of the distributed content.

The receiver of the distributed content can reproduce the content from the content distribution apparatus as long as it can receive the continuation signal and cannot reproduce the content while it cannot receive the continuation signal. Therefore, a receiver in the state that it cannot receive the continuation signal cannot reproduce content even if it has received and acquired the content. In this way, it is possible to inhibit content from being taken out without permission.

The content distribution apparatus distributes the continuation signal at predetermined intervals and the receiver cannot reproduce the content when it cannot receive the continuation signal in the predetermined interval.

The content distribution apparatus further has a function of managing the number of distributed contents.

The content distribution apparatus distributes reproduction procedure information indicating a procedure for reproducing the content.

The continuation signal is distributed within a predetermined area. The continuation signal is distributed by means of broadcasting. Further, the content is distributed by means of broadcasting.

When the content distribution apparatus receives an acquisition request for requesting acquisition of desired content, the distribution apparatus distributes the desired content to the source of the request.

According to a further aspect of the invention, a content distribution method is applied to a system having at least one content reception apparatus receiving and reproducing distributed content and a content distribution apparatus distributing the content. This content distribution method includes the step of distributing by the content distribution apparatus a continuation signal for enabling the content to be reproduced continuously and includes the step of making it impossible to reproduce the content by the content reception apparatus while the reception apparatus cannot receive the continuation signal.

According to a still further aspect of the invention, a content reception method includes the steps of receiving content and reproducing the received content. The content reproducing step cannot reproduce the received content while it is impossible to receive a continuation signal for enabling the content to be reproduced continuously.

According to a still further aspect of the invention, a content distribution method includes the steps of distributing content and distributing a continuation signal for enabling the content to be reproduced continuously by a receiver of the distributed content.

According to a still further aspect of the invention, a recording medium has a content distribution program recorded thereon for a computer to execute a content distribution method applied to the system discussed above.

According to a still further aspect of the invention, a recording medium has a content reception program recorded thereon for a computer to execute the content reception method discussed above.

According to a still further aspect of the invention, a recording medium has a content distribution program recorded thereon for a computer to execute the content distribution method discussed above.

According to a still further aspect of the invention, a program product is provided for a computer to execute a content distribution method applied to the system discussed above.

According to a still further aspect of the invention, a program product is provided for a computer to execute the content reception method discussed above.

According to a still further aspect of the invention, a program product is provided for a computer to execute the content distribution method discussed above.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows as a concept a content distribution system according to a first embodiment of the present invention.
Fig. 2 is a flowchart of a process followed by a distribution apparatus 1 according to the first embodiment.
Fig. 3 is a flowchart of a process followed by a reception apparatus 2 according to the first embodiment.
Fig. 4 is a functional block diagram of the content distribution system according to the first embodiment.
Fig. 5 is a hardware block diagram showing major components of reception apparatus 2 according to the first embodiment.
Fig. 6 shows as a concept a specific application of the first embodiment.
Figs. 7A and 7B illustrate functions of a content distribution system according to a second embodiment.
Fig. 8 is a hardware block diagram showing major components constituting a reception apparatus 2A according to the second embodiment.
Fig. 9 shows as a concept the content distribution system according to the second embodiment.
Figs. 10A and 10B show exemplary pictures indicated on a display 14 of reception apparatus 2A according to the second embodiment.
Fig. 11 is a flowchart of a process followed by a distribution apparatus 1A according to the second embodiment.
Fig. 12 is a flowchart of a process followed by reception apparatus 2A according to the second embodiment.
Fig. 13 shows as a concept a specific application of content distribution system 3A according to the second embodiment.
Fig. 14 shows a structure of a distribution apparatus 1B according to a third embodiment.
Fig. 15 shows a structure of a reception apparatus 2B according to the third embodiment.

### DESCRIPTION OF THE PREFERRED EMBODIMENTS

Embodiments of the present invention are hereinafter described in conjunction with the drawings.

### First Embodiment

A first embodiment is discussed now.

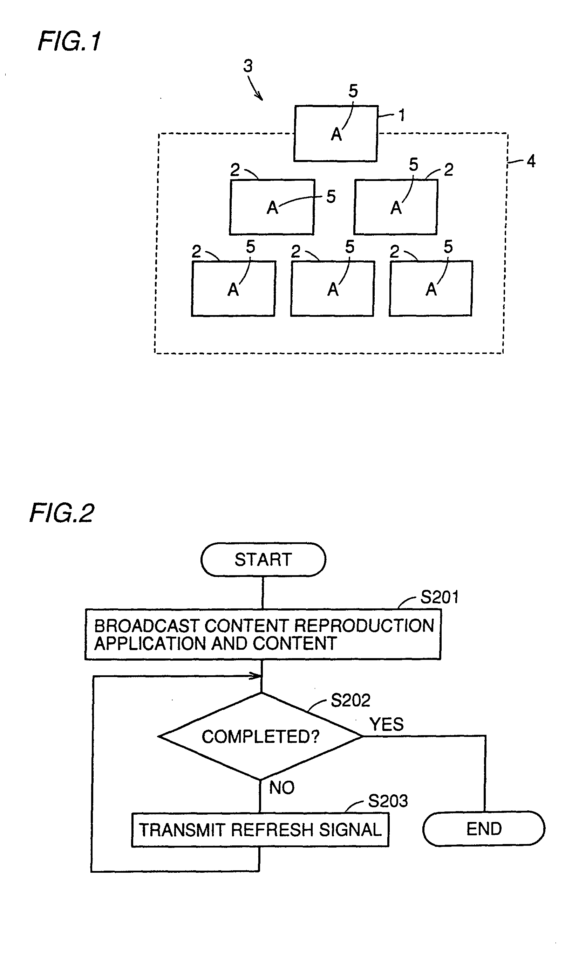

A content distribution system 3 in Fig. 1 according to the first embodiment includes, in a pseudo closed space 4, a content distribution apparatus (hereinafter distribution apparatus) 1 and at least one content reception apparatus (hereinafter reception apparatus) 2. Distribution apparatus 1 delivers worthful information in digital form such as electronic books and magazines (hereinafter content 5). Reception apparatus 2 receives and reproduces the delivered content 5 and presents the content to users. The content is herein presented by being displayed as an image (moving picture/still picture). However, the content may alternatively be presented in other forms. For example, the content may be presented as voice/musical output or printed, or these means may be combined. In Fig. 1, content 5 represented by "A" is distributed from distribution apparatus 1 to reception apparatuses 2.

The first embodiment is applicable, for example, to pseudo closed space 4 like a waiting room of public establishments such as bank and beauty parlor. Distribution apparatus 1 is installed in pseudo closed space 4 and a user carrying reception apparatus 2 which is a portable information processing terminal enters the waiting room for receiving and reproducing content 5 to read it.

Here, pseudo closed space 4 refers to a space where communication is possible between distribution apparatus 1 and reception apparatus 2. In this case, as long as content 5 supplied from distribution apparatus 1 is delivered within pseudo closed space 4, the number of distributed contents is not restricted (the distributor side purchases content 5 on the basis of such a contract). Alternatively, content 5 which is confidential data to be used for conference could be delivered within pseudo closed space 4 like a conference room. In this case, members attending the conference receive content 5 by means of respective reception apparatuses 2 carried, and then reproduce and watch the data for discussion. When the members exit from the room when the conference is terminated, content 5 is deleted from reception apparatuses 2.

Fig. 2 shows a flowchart showing a process followed by distribution apparatus 1. Referring to Fig. 2, in step S201, content 5 and a relevant application program for reproducing the content (hereinafter content reproduction application) are broadcast by distribution apparatus 1 to all reception apparatuses 2 in pseudo closed space 4. Here, the content reproduction application refers to an application program provided per content 5 or per type of content 5 for reproducing relevant content 5. When content 5 is an electronic book, for example, this application program corresponds to an electronic book viewer program for displaying the electronic book. The content reproduction application is programmed such that, if reception apparatus 2 does not receive refresh signal RF discussed later over a predetermined period, reception apparatus 2 cannot reproduce content 5 or the application is automatically deleted together with content 5 received by reception apparatus 2. Refresh signal RF is used for continuing reproduction of content 5 by reception apparatus 2.

The content reproduction application is herein described as a program having information regarding a procedure for reproducing content 5 and presenting the reproduced content to users. However, the application may be any if it has information indicating a procedure for reproducing and presenting received content 5 to users that is executable by reception apparatus 2.

In step S202, distribution apparatus 1 decides whether distribution of content 5 is terminated or not. If termination is selected (YES), this process is completed. Otherwise (NO), this process proceeds to step S203 discussed later. The process can be terminated periodically to repeat steps from S201 and accordingly distribution apparatus 1 can deliver content 5 and the content application program to each reception apparatus 2 at regular intervals. For example, the process in accordance with the flowchart shown in Fig. 2 can be started every three minutes to enable a user-carrying reception apparatus 2 that cannot receive content 5 at the time of entrance into the room to receive content 5 within subsequent 3 minutes.

In step S203, when clocking of a predetermined period that is set in advance is completed, refresh signal RF is transmitted from distribution apparatus 1 to all reception apparatuses 2 within pseudo closed space 4, and thereafter the process returns to step S202 by re-starting clocking of the predetermined period. In this way, the process loop consisting of steps S202 and 203 is repeated so that distribution apparatus 1 can periodically transmit refresh signal RF to all reception apparatuses in pseudo closed space 4.

Reception apparatus 2 can reproduce content 5 by means of the content reproduction application if the reception apparatus can receive refresh signal RF in the predetermined period. However, if reception apparatus 2 does not receive refresh signal RF after the predetermined period, it cannot reproduce content 5.

Refresh signal RF may be any trigger signal functioning, with respect to a content reproduction application, to accomplish continuous reproduction of relevant content 5. For example, refresh signal RF may be a regularly arranged signal train like "01111110", a pulse signal kept at a low level for a predetermined period, a signal formed with a predetermined frequency, and the like.

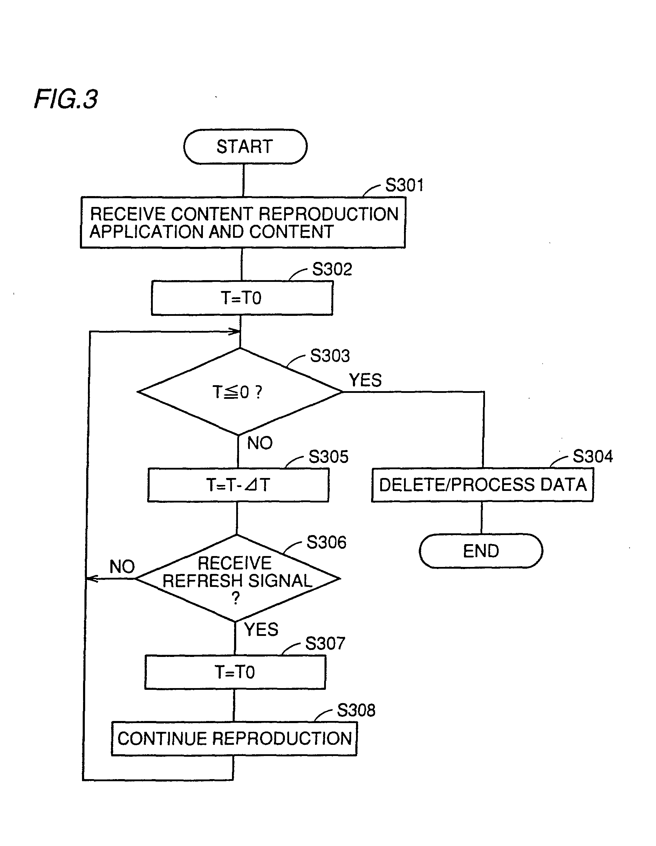

Fig. 3 shows a flowchart of a process followed by reception apparatus 2 according to the first embodiment. Referring to Fig. 3, reception apparatus 2 receives, in step S301, the content reproduction application and content 5 broadcast from distribution apparatus 1. In the subsequent step S302, constant T0 is set to variable T. Constant T0 indicates a value of a predetermined period clocked by a signal confirmation unit 205 discussed later.

In step S303, the value of variable T is judged. Upon the judgement, if the value of variable T is equal to or smaller than 0 (YES), it is accordingly regarded that refresh signal RF cannot be received in a predetermined period. In step S304, the content reproduction application is deleted together with relevant content 5 or processed such that it cannot reproduce relevant content 5, by the function incorporated in advance in the application. This process is thereafter completed.

Upon judgement in step S303, if the value of variable T is greater than 0 (NO), value Δ T representing a predetermined time is subtracted from the value of variable T. Then, in step S306, it is decided whether refresh signal RF is received or not. Upon the decision, if the signal is not received (NO), the process returns to step S303 to similarly repeat following steps. If received (YES), in step S307, constant T0 is set to variable T again and reproduction of content 5 is continued in step S308. The process thereafter returns to step S303 and subsequent steps are repeated.

According to the process described above, a user entering pseudo closed space 4 can receive refresh signal RF by means of reception apparatus 2 as long as the user is in pseudo closed space 4. The user can thus receive, reproduce and watch content 5 by reception apparatus 2. When the user carrying reception apparatus 2 leaves pseudo closed space 4, the user cannot receive refresh signal RF by means of reception apparatus 2 and accordingly cannot reproduce content 5. In this way, it is possible to prevent the user from taking content 5 out of pseudo closed space 4 without permission. Of course, once the user enters pseudo closed space 4 again, the user can resume reception of refresh signal RF and thus reproduce content 5.

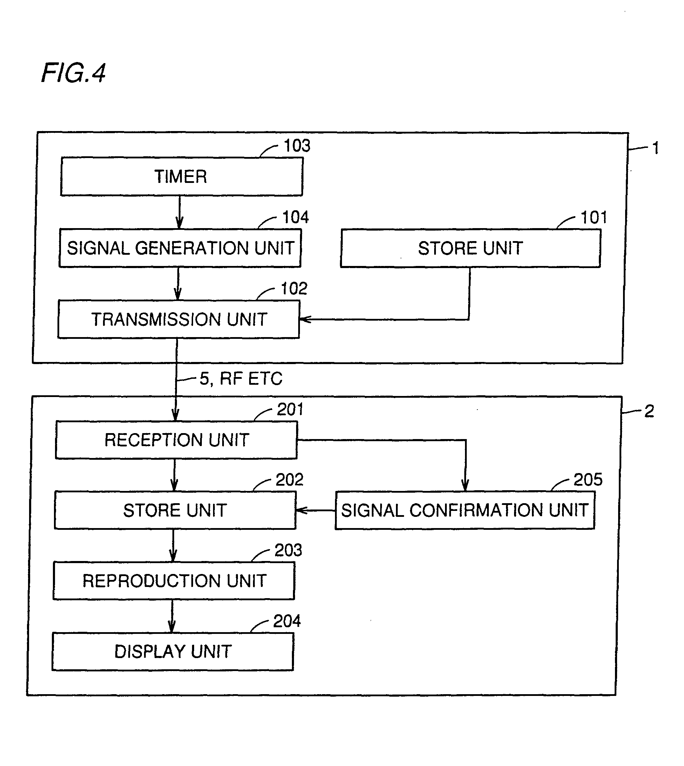

A functional structure of the content distribution system according to the first embodiment is described in conjunction with Fig. 4. In content distribution system 3, one or more reception apparatuses 2 are connected by communication to distribution apparatus 1. However, for convenience of description, Fig. 4 shows a state where distribution apparatus 1 and one reception apparatus 2 are coupled by communication.

Referring to Fig. 4, distribution apparatus 1 includes a store unit 101 storing in advance information containing multiple types of contents 5 and content reproduction applications relevant to respective types, a transmission unit 102, a timer 103 and a signal generation unit 104. Reception apparatus 2 includes a reception unit 201, a store unit 202 storing information containing one or more contents 5 and one or more content reproduction applications, a reproduction unit 203, a display unit 204, and a signal confirmation unit 205.

In distribution apparatus 1, content 5 and a relevant content reproduction application read from store unit 101 are delivered via transmission unit 102 to reception apparatus 2. Timer 103 detects, through its clocking operation, termination of a predetermined period and accordingly supplies a detection signal to signal generation unit 104. Signal generation unit 104 responds to the supply of the detection signal from timer 103 to generate refresh signal RF and provide refresh signal RF to transmission unit 102. Refresh signal RF is then transmitted via transmission unit 102 to reception apparatus 2.

Communication facility provided by transmission unit 102 may be the one corresponding to radio communication system or wired communication system. Preferably, an appropriate communication system corresponds to a radio communication system capable of implementing broadcast communication for transmitting information simultaneously to a plurality of reception apparatuses 2. Examples of such a communication system are infrared communication in accordance with the IrDA standards, radio communication system in accordance with the Bluetooth standards, and the like.

In reception apparatus 2, content 5 and the content reproduction application supplied from distribution apparatus 1 are received via reception unit 201 and then stored in store unit 202. Reproduction unit 203 is formed by using the received content reproduction application. Reproduction unit 203 reproduces corresponding content 5 stored in store unit 202 and displays reproduced content 5 on display unit 204.

Refresh signal RF transmitted from distribution apparatus 1 is received via reception unit 201. Signal confirmation unit 205 confirms, based on information received by reception unit 201, whether refresh signal RF is received or not. As long as signal confirmation unit 205 confirms that refresh signal RF is continuously received in a predetermined period, signal confirmation unit 205 performs no operation for store unit 202. Then, reproduction of content 5 received and stored in store unit 202 is continued by reproduction unit 203. On the other hand, if refresh signal RF cannot continuously be received in the predetermined period, signal confirmation unit 205 operates to delete the content reproduction application stored in store unit 202 together with relevant content 5 or process the content reproduction application into data that cannot reproduce content 5.

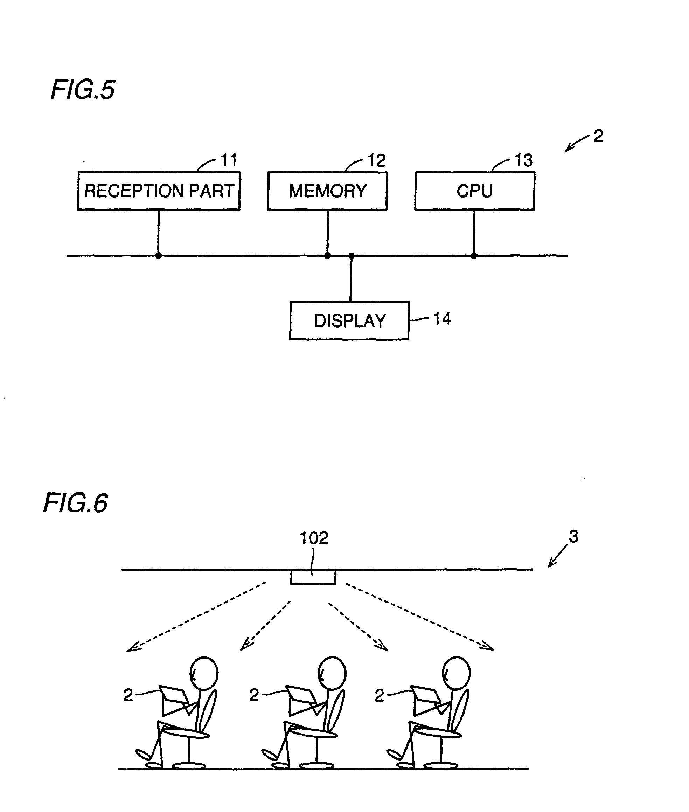

The principal hardware structure of reception apparatus 2 according to the first embodiment is shown in Fig. 5. Referring to Fig. 5, reception apparatus 2 includes a reception part 11 corresponding to reception unit 201, a memory 12 corresponding to store unit 202, a CPU (central processing unit) 13 and a display 14 corresponding to display unit 204. These components are connected to each other via a bus. Reception part 11 includes a communication interface. This communication interface corresponds to the radio communication system for example. Content 5 and the content reproduction application received by reception part 11 are stored by CPU 13 in memory 12. Under control by CPU 13, the content reproduction application stored in memory 12 is executed to reproduce content 5 stored in memory 12 and accordingly the reproduced content 5 is indicated on display 14.

Refresh signal RF is also received by reception part 11. CPU 13 confirms whether refresh signal RF is received or not in a predetermined period. Depending on the confirmation, if no refresh signal RF is received after the end of the predetermined period, an operation is carried out for preventing content 5 from being indicated on display 14. Specifically, CPU 13 deletes content 5 and the relevant content reproduction application stored in memory 12 or processes the content reproduction application into data that cannot reproduce content 5.

Distribution apparatus 1 is structured to include, similarly to reception apparatus 2, a CPU and a memory and further include a transmission part for transmitting data such as content 5.

Fig. 6 shows a specific application of the first embodiment. Fig. 6 assumes that pseudo closed space 4 is the inside of an airplane. In this pseudo closed space 4, transmission unit 102 of distribution apparatus 1 attached to the ceiling distributes content 5 by means of radio broadcasting indicated by the dotted lines with the arrows, users accordingly receive and reproduce distributed content 5 by respective reception apparatuses 2 carried thereby, and an image of content 5 produced through the reproduction is indicated on display 14 to be watched by the users. When a user exits the airplane (pseudo closed space 4) (not shown), reception apparatus 2 cannot receive refresh signal RF so that reproduction of content 5 becomes impossible at this time. In this way, the distributor side of content 5 can save the labor of collecting content 5 and any trouble in terms of copyright of content 5 can be avoided.

When content 5 is confidential data for a conference to be used in a conference room or the like, content 5 is distributed to notebook personal computers as reception apparatuses 2 carried by members of the conference. After the conference, content 5 is automatically deleted by the notebook personal computers and thus no trouble occurs regarding confidentiality.

### Second Embodiment

Description of a second embodiment is presented below.

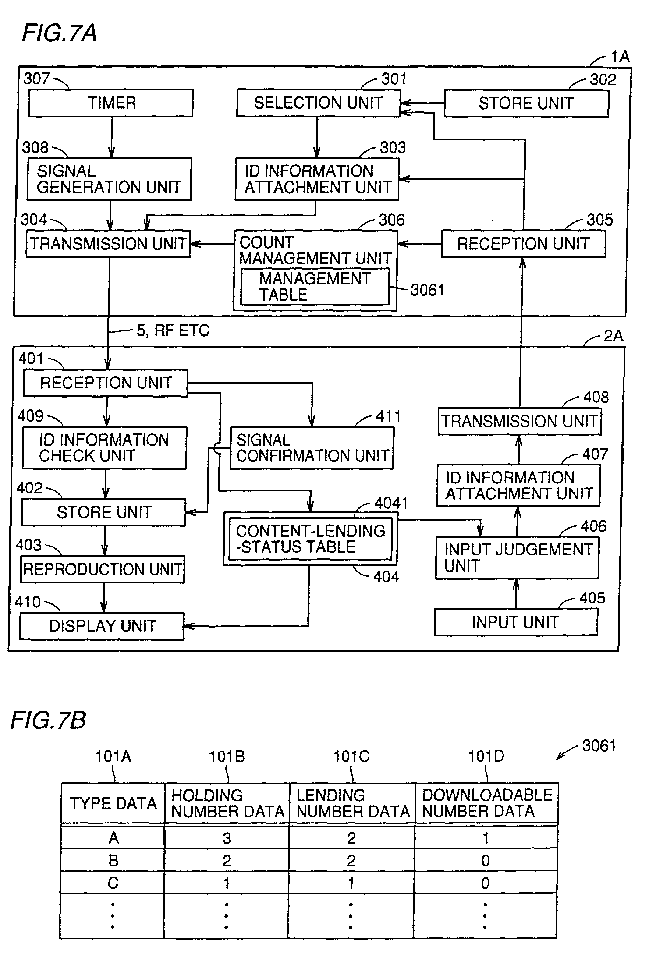

A functional structure of a content distribution system according to the second embodiment is discussed in conjunction with Figs. 7A and 7B. In the content distribution system of the second embodiment, one or more reception apparatuses 2A are communicably connected to a distribution apparatus 1A. However, for convenience of description herein, one reception apparatus 2A is connected to distribution apparatus 1A. Referring to Fig. 7A, distribution apparatus 1A includes a selection unit 301, a store unit 302, an identification (ID) information attachment unit 303, a transmission unit 304, a reception unit 305, a count management unit 306, a timer 307, and a signal generation unit 308. Reception apparatus 2A includes a reception unit 401, a store unit 402, a reproduction unit 403, a table store unit 404, an input unit 405, an input judgement unit 406, an identification (ID) information attachment unit 407, a transmission unit 408, an identification (ID) information check unit 409, a display unit 410, and a signal confirmation unit 411.

Distribution apparatus 1A differs from the distribution apparatus of the first embodiment in that the former includes selection unit 301 for selecting content 5 to be stored in store unit 302, ID information attachment unit 303 attaching ID information for uniquely identifying reception apparatus 2A to which content 5 is transmitted, reception unit 305 for receiving data, and count management unit 306 storing a management table 3061 to manage information therein.

Reception apparatus 2A differs from the reception apparatus of the first embodiment in that the former includes input unit 405 by which a user enters desired information based on information indicated on display unit 410, input judgement unit 406 for judging the information entered by input unit 405, ID information attachment unit 407 attaching pre-allocated identification information for identifying reception apparatus 2A itself with respect to transmitted data, transmission unit 408 for transmitting data, ID information check unit 409 for comparing identification information contained in received data with the identification information pre-allocated to reception unit 2A, and table store unit 404 storing a content-lending-status table 4041 and updating information in the table. Fig. 7B shows contents of management table 3061 discussed later in detail.

In distribution apparatus 1A shown in Fig. 7A, when reception unit 305 receives an acquisition request for asking to obtain content 5, reception unit 305 provides received information to selection unit 301, ID information attachment unit 303 and count management unit 306. Count management unit 306 analyzes the received information to determine whether the received information is acquisition request or return request for content 5. Based on the analysis, count management unit 306 updates information in management table 3061 and supplies data in updated management table 3061 to transmission unit 304. According to the received information, selection unit 301 selectively reads requested content 5 and a relevant content reproduction application among one or more contents 5 stored in store unit 302, and then provides the read content 5 and application to ID information attachment unit 303. ID information attachment unit 303 extracts, from the received information, ID information of reception apparatus 2A that makes the acquisition request for content 5, and adds the extracted information to content 5 supplied from selection unit 301. Content 5 with the ID information added thereto and its relevant content reproduction application are provided from ID information attachment unit 303 to transmission unit 304. Transmission unit 304 enters supplied refresh signal RF, the data in management table 3061 and content 5 with the added ID information and relevant content reproduction application to transmit them to reception apparatus 2A. Timer 307 and signal generation unit 308 operate similarly to timer 103 and signal generation unit 104 of the first embodiment, and description thereof is not repeated here.

In reception apparatus 2A shown in Fig. 7A, ID information check unit 409 checks the ID information regarding information received by reception unit 401. Specifically, the ID information attached to content 5 contained in the received information is compared with ID information pre-allocated to reception apparatus 2A. If they match, received content 5 is stored in store unit 402. At this time, the data in management table 3061 included in the received information is used to update information in content-lending-status table 4041 of table store unit 404. Input unit 405 corresponds to a download button 8, a return button 9, a selection button 18, and a decision button 19 explained later. When these buttons are manipulated by a user, input judgement unit 406 judges that an acquisition request for content 5 or a return request for content 5 is provided via input unit 405. This judgement and request information are output to ID information attachment unit 407. With respect to return request for content 5, ID information attachment unit 407 performs nothing. With respect to the acquisition request, ID information attachment unit 407 adds corresponding ID information to the acquisition request. ID information attachment unit 407 accordingly supplies the requests to transmission unit 408. Transmission unit 408 enters the supplied requests to be transmitted to distribution apparatus 1A.

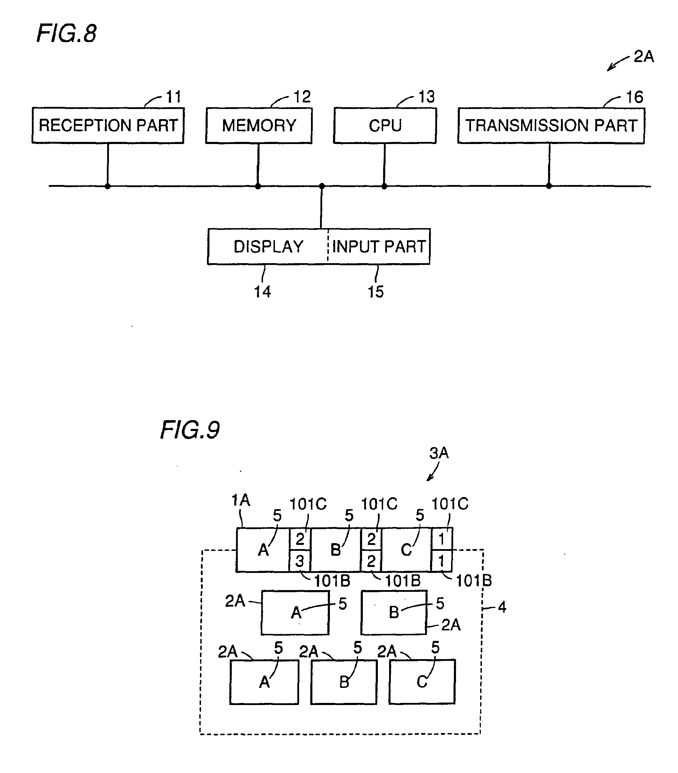

Fig. 8 shows the principal hardware structure of reception apparatus 2A according to the second embodiment. Referring to Fig. 8, the hardware structure differs from the one employed in the first embodiment in that the former includes an input part 15 operated by a user for entering information and a transmission part 16 for transmitting data. A memory 12 corresponds to store unit 402 and table store unit 404. Transmission part 16 corresponds to transmission unit 408. Input part 15 corresponding to input unit 405 is formed of a touch panel, a mouse, a keyboard or the like. When input part 15 is the touch panel, input part 15 is integrated with a display 14. Display 14 corresponds to display unit 410. Transmission part 16 is used for transmitting data to distribution apparatus 1A and corresponds to infrared communication interface in accordance with the IrDA standards or radio communication interface in accordance with the Bluetooth standards, for example. Other components shown in Fig. 8 are similar to those of the first embodiment and description thereof is not repeated here.

Fig. 9 shows as a concept the content distribution system according to the second embodiment. Structural components in the second embodiment identical to those in the first embodiment have the same reference characters and detailed description thereof is not repeated here. Content distribution system 3A shown in Fig. 9 is mainly different from that in the first embodiment in that the number of contents 5 that can be received within a pseudo closed space 4 is limited. Then, distribution apparatus 1A must perform a process using management table 3061 for managing the number of distributed contents 5. Further, reception apparatus 2A must perform a process for requesting content 5 or returning content 5 for which reading or watching is finished.

It is supposed that the content distribution system of the second embodiment can distribute three types of contents 5, "A", "B" and "C".

As shown in Fig. 7B, management table 3061 of the second embodiment stores type data 101A indicating the content types "A", "B" and "C" and further stores, with regard to respective types of type data 101A, holding number data 101B, lending number data 101C and downloadable number data 101D. Holding number data 101B indicates the number of contents 5 of a corresponding type that are retained by distribution apparatus 1A. Here, holding number data 101B is understood to indicate the maximum number of contents 5 of a corresponding type that can be downloaded by distribution apparatus 1A. Lending number data 101C indicates the number of contents 5, included in contents 5 with its number indicated by corresponding holding number data 101B, that are downloaded to reception apparatus 2A and now being lent to users (not returned from he users). Downloadable number data 101D indicates the number of contents 5 of a corresponding type that can be lent (downloaded) at the present time.

In management table 3061 shown in Fig. 7B, holding number data 101B indicates 3 for type "A", 2 for type "B" and 1 for type "C". Lending number data 101C indicates 2 for type "A" and accordingly downloadable number data 101D indicates that remaining one content 5 is downloadable to reception apparatus 2A. For types "B" and "C" each, holding number data 101B and corresponding lending number data 101C indicate the same value and accordingly downloadable number data 101D indicates 0. This means that all contents 5 of a corresponding type that are held by distribution apparatus 1A have been downloaded. Consequently, unless contents 5 corresponding to types "B" and "C" are returned from any reception apparatus 2A, these contents 5 cannot be downloaded to other reception apparatuses 2A. Fig. 9 shows the types of contents 5 downloaded to respective reception apparatuses 2A according to the state of distribution of contents 5 shown in management table 3061 in Fig. 7B.

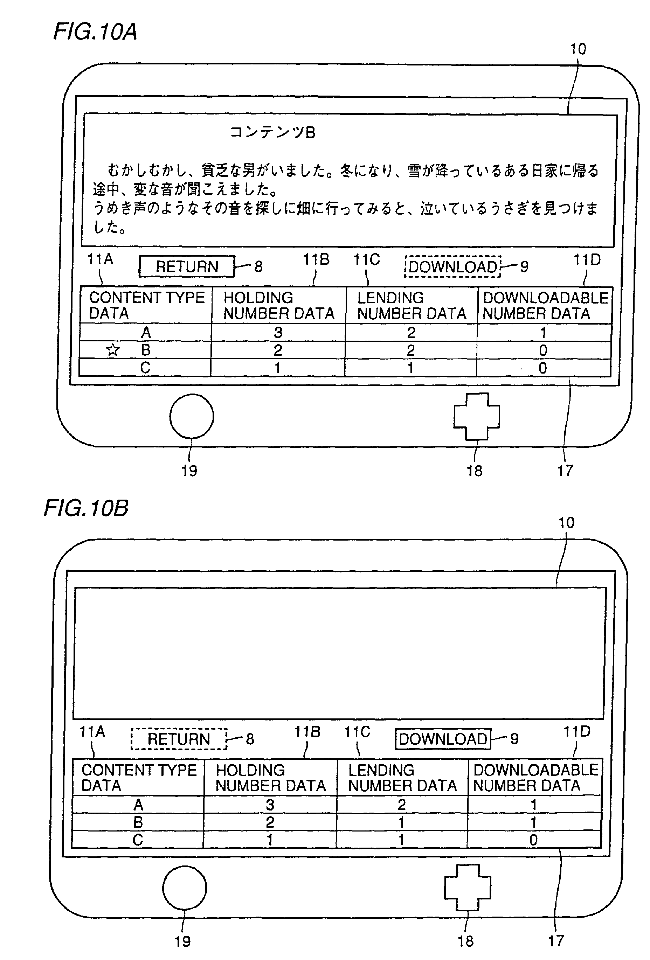

Figs. 10A and 10B show exemplary pictures presented on display 14 of reception apparatus 2A according to the second embodiment. The pictures shown in Figs. 10A and 10B indicate a return button 8, a download button 9, a content display area 10, a content-lending-status area 17, a selection button 18 and a decision button 19. Content display area 10 displays information of content 5 generated by reproduction. Information displayed in content-lending-status area 17 corresponds to the information in content-lending-status table 4041 of store unit 202. The information in content-lending-status table 4041 is generated and updated according to information in management table 3061 transmitted from distribution apparatus 1A and received by reception apparatus 2A.

Specifically, content-lending-status area 17 displays, for respective types of contents held by distribution apparatus 1A, content type data 11A indicating the type, holding number data 11B indicating the number of contents 5 retained by distribution apparatus 1A, lending number data 11C indicating the number of contents 5 which have been downloaded to reception apparatus 2A but not yet returned, and downloadable number data 11D indicating the number of downloadable contents 5. Return button 8 is manipulated by a user for returning content 5 displayed in content display area 10 to distribution apparatus 1A. Upon manipulation of return button 8, a return request for that content 5 is transmitted to distribution apparatus 1A. Download button 9 is operated by the user for downloading content 5 from distribution apparatus 1A to reception apparatus 2A. Download of desired content 5 is requested as follows. The user confirms information displayed in content-lending-status area 17 and accordingly selects by manipulation of selection button 18 content type data 11A corresponding to a desired type among types of downloadable contents 5 (any type with its number indicated by corresponding downloadable number data 11D that is at least 1), and subsequently manipulates decision button 19 to determine selection details and manipulates content download button 9. In this way, a request for receiving selected content 5 is transmitted to distribution apparatus 1A.

For example, when a reception request for downloadable content 5 of type "B" is transmitted, that content 5 is downloaded to and reproduced by reception apparatus 2A. Information obtained through the reproduction is indicated in content display area 10 as shown in Fig. 10A. At this time, data in content-lending-status area 17 is updated. When the user thereafter manipulates return button 8 to return that content 5 to distribution apparatus 1A, information of content 5 is not displayed in content display area 10 as shown in Fig. 10B. At this time, data in content-lending-status area 17 is updated from the one shown in Fig. 10A to the one shown in Fig. 10B.

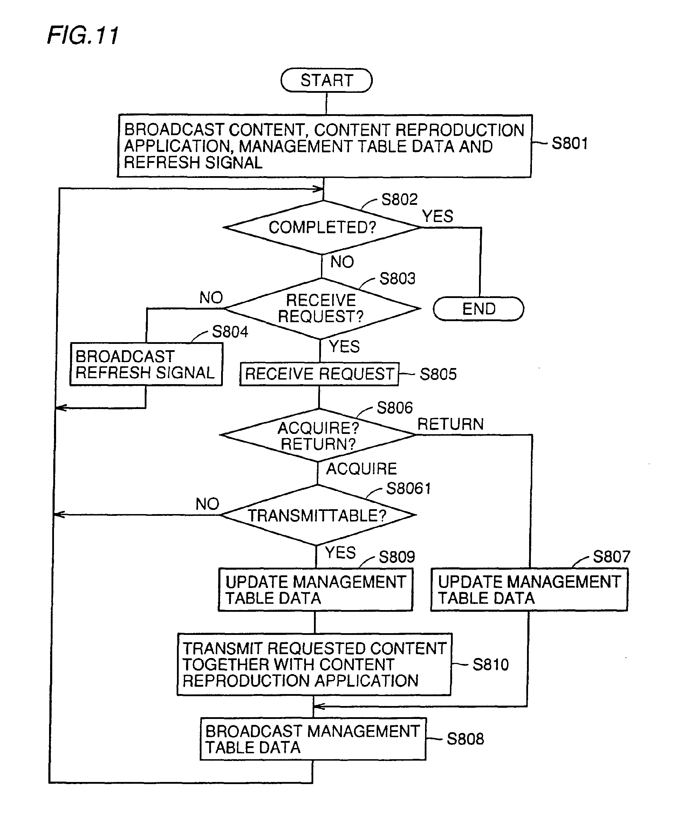

Fig. 11 shows a flowchart of a process followed by distribution apparatus 1A according to the second embodiment. In step S801, distribution apparatus 1A broadcasts content 5, content reproduction application, and data in management table 3061. Here, the data in management table 3061 correspond to data shown in content-lending-status area 17 in Figs. 10A and 10B. In step S802, it is decided whether the process is terminated or not. If the process is not ended (NO), it is decided in step S803 whether a transmission or return request for content 5 is transmitted from reception apparatus 2A. If there is supplied no request, refresh signal RF is distributed in step S804. The process thereafter returns to step S802.

In step S803, when it is decided that reception apparatus 2A supplies a request, a request signal is received in step S805 and decision is made in step S806 as to whether the request represented by that signal is a request for acquisition or return for content 5. If the request is made for acquiring content 5, it is decided in step S8061 whether content 5 for which acquisition is requested can be transmitted or not. Specifically, if corresponding downloadable number data 101D in management table 3061 indicates value 0, it is determined that transmission is impossible. Accordingly, steps 809, 810 and 808 discussed later are skipped and the process returns to step S802. If the value is at least one and accordingly transmission is possible, the process proceeds to step S809.

In step S809, information in management table 3061 is updated based on request information. Specifically, 1 is added to the value of lending number data 101C corresponding to type data 101A of content 5 for which transmission is requested, and 1 is subtracted from the value of corresponding downloadable number data 101D. Then, in step S810, the requested content 5 and relevant content reproduction application are read from store unit 302 and transmitted to requesting reception apparatus 2A. At this time, ID information of that reception apparatus 2A, received together with the acquisition request, is attached to content 5 to be transmitted. The requesting reception apparatus 2A is specified based on the ID information of the reception apparatus 2A that is received together with the acquisition request. In the subsequent step S808, data in management table 306 is read and broadcast to all reception apparatuses 2A in pseudo closed space 4. The process thereafter returns to step S802.

When a request for returning content 5 is received in step S806, data in management table 3061 is updated in step S807 based on the request information. Specifically, 1 is subtracted from the value of lending number data 101C corresponding to type data 101A of content 5 for which return is requested, and 1 is added to the value of corresponding downloadable number data 101D. Step S808 is thereafter performed as described above and the process returns to step S802.

Here, decision is made in step S8061 as to whether content, for which transmission request is made, can be transmitted or not. This decision can be skipped. In other words, the user confirms information in content-lending-status area 17 presented on display 14 and manipulates download button 9 as discussed above. Then, no request should be made for transmission of content 5 for which corresponding downloadable number data 11D in content-rending-status area 17 indicates the value 0.

Although no condition should occur where decision in step S8061 is necessary, this decision is required under the condition as described below. Namely, suppose that a user transmits an acquisition request for downloadable content 5 since corresponding downloadable number data 11D indicates the value of at least 1. If another user simultaneously transmits an acquisition request for the same content 5 and that another user can download the content 5 first, the condition as mentioned above occurs. Therefore, if transmission is determined as impossible in step S8061, the requesting reception apparatus 2A is preferably informed of the fact that content 5 cannot be downloaded.

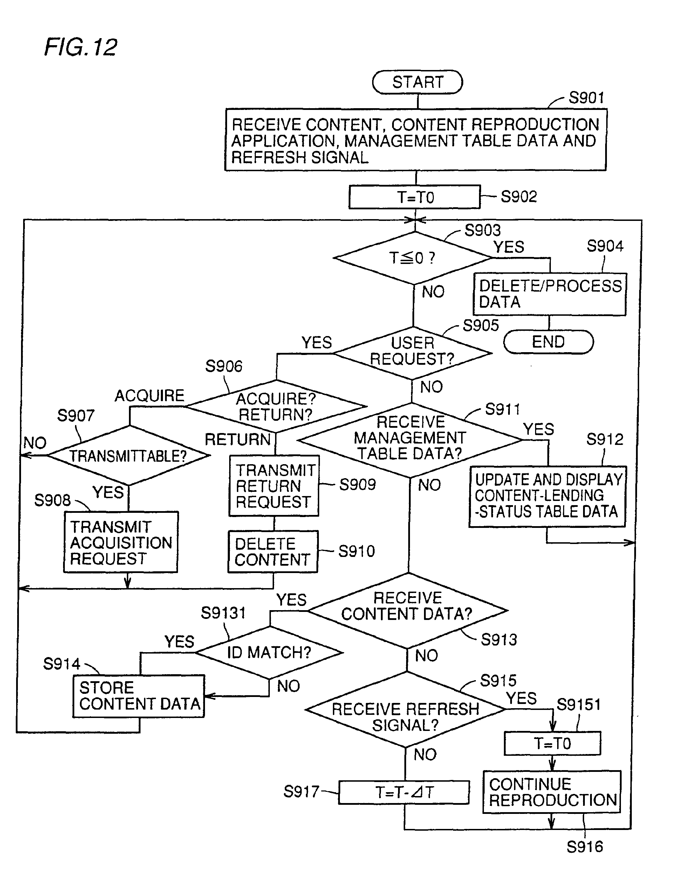

Fig. 12 shows a flowchart of a process followed by reception apparatus 2A according to the second embodiment. In step S901, reception apparatus 2A receives content 5, content reproduction application, data in management table 3061 and refresh signal RF from distribution apparatus 1A. In step S902, constant T0 is set to variable T indicating a predetermined period clocked by signal confirmation unit 411. In step S903, the value of variable T is judged. If the value of variable T is larger than 0 (NO), decision is made in step S905 as to whether any request is made by manipulation of input unit 405. If there is a request, it is decided in subsequent step S906 whether the request is made for acquiring content 5 or for returning content 5. If the request is judged as the acquisition request, it is decided in step S907 whether requested content 5 can be transmitted or not, according to details of content-lending-status table 4041 of table store unit 404 that is updated based on the data in management table 3061 received in step S901. Specifically, according to the decision, if downloadable number data 101D corresponding to the requested content 5 indicates the value 0 and accordingly transmission is impossible, the process returns to step S903. If corresponding downloadable number data 101D indicates a value greater than 0 and accordingly transmission is possible, transmission unit 408 transmits a signal for requesting transmission of content 5 to distribution apparatus 1A in step S908. The process thereafter returns to step S903. At this time, ID information attachment unit 407 attaches in advance ID information for specifying the reception apparatus 2A to enable that reception apparatus 2A which transmits the acquisition request to uniquely be identified by distribution apparatus 1A.

In step S906, if it is decided that the request is made for returning content 5, a signal for requesting return of content 5 is transmitted by transmission unit 408 to distribution apparatus 1A in step S909. In step S910, that content 5 is deleted from store unit 402 and thereafter the process returns to step S903.

In step S905, if there is no user request, step S911 determines whether data received in step S901 is data in management table 3061 or not. If that data is the data in management table 3061, step S912 updates information in content-lending-status table 4041 of table management unit 404 based on the data in the received management table 3061. The updated information in content-lending-status table 4041 is displayed on content-lending-status area 17. Then, the process returns to step S903.

According to the decision in step S911, if the received data is not the data in management table 3061, step S913 decides whether the received data is content 5 or not. If the data is content 5, ID information check unit 409 checks in step S9131 whether ID information attached to that content 5 matches ID information preliminarily allocated to reception apparatus 2A. If ID information matching is detected, the received content 5 and relevant content reproduction application are stored in store unit 402 in step S914 and the process returns to step S903. If no ID information matching is detected, it is determined that the received content 5 is not addressed to that reception apparatus 2A. Then step S914 for storing content 5 is skipped and the process returns to step S903.

When the decision made in step S913 indicates that the received data is not content 5, step S915 decides whether the received data is refresh signal RF or not. If the data is refresh signal RF, constant T0 is set to the value of variable T again in step S9151 and reproduction of content 5 is continued in step S916. The process thereafter returns to step S903.

When the decision in step S915 indicates that the received data is not refresh signal RF, signal confirmation unit 411 subtracts in step S917 value ΔT representing a predetermined time from the value of variable T. The process then returns to step S903.

When the decision in step S903 indicates that the value of variable T is 0 or less, the content reproduction application deletes or processes data in step S904 in a similar manner to that in step S304 discussed earlier. This reception apparatus 2A is accordingly unable to reproduce content 5. After this, the process is completed.

If a user leaves pseudo closed space 4 carrying reception apparatus 2A without returning content 5 to distribution apparatus 1A that has been downloaded by the procedure discussed above, there occurs inconvenience that content 5 is taken out of pseudo closed space 4 without permission. In other words, management table 3061 indicates that the content 5 remains lent and accordingly that content 5 cannot be lent to a new user. In order to avoid such inconvenience, a mechanism as explained below can be provided. Specifically, according to this mechanism, when reception apparatus 2A transmits ID information in step S908 to distribution apparatus 1A, distribution apparatus 1A receiving the ID information then periodically broadcasts a signal indicating the transmitted ID information into pseudo closed space 4. Reception apparatus 2A corresponding to the ID information receives the signal and then transmits a response signal to distribution apparatus 1A. By means of this mechanism, distribution apparatus 1A can know whether reception apparatus 2A to which content 5 is downloaded is present within pseudo closed space 4, depending on reception of the response signal.

Through the process described above, a user carrying reception apparatus 2A enters pseudo closed space 4 and confirms information in content-lending-status area 17 that is indicated on display 14. The user accordingly specifies content 5 of a desired type which can be downloaded and requests transmission and acquisition of that content 5. When the user finishes watching or reading the acquired content 5 indicated on display 14, the user can return the content 5 to distribution apparatus 1A.

Content distribution system 3A according to the second embodiment can thus distribute content 5 under the condition that restrictions are imposed on the number of contents 5 of various types to be distributed. Further, even if a user takes content 5 out of pseudo closed space 4, content 5 cannot be reproduced outside the pseudo closed space 4. It is thus possible to prevent content 5 from being taken out without permission and any trouble in terms of copyright can be avoided.

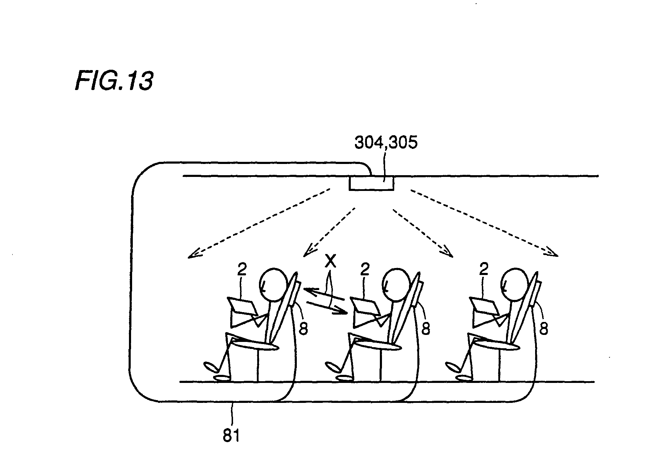

Fig. 13 shows as a concept a specific application of content distribution system 3A of the second embodiment. As shown, transmission unit 304 and reception unit 305 of distribution apparatus 1A are attached to the ceiling. The system shown in Fig. 13 differs from the first embodiment in that the former includes at least one communication device 8 coupled to transmission unit 304 and reception unit 305 by a cable 81. Radio communication is possible between communication device 8 and reception apparatus 2A carried by a user. The bi-directional arrow set X shown in, Fig. 13 indicates that ID information is communicated between reception apparatus 2A and communication device 8. Data containing ID information is transmitted and received by one-to-one communication between each reception apparatus 2A and transmission unit 304 and reception unit 305 provided on the ceiling via cable 81 and communication device 8. When broadcast communication of refresh signal RF or the like is implemented as shown by the dotted lines with respective arrows, radio communication is performed as done in the first embodiment. The second embodiment thus employs the structure having a reduced amount of process load required for data transmission and reception by dividing communication into one-to-many communication by broadcasting and one-to-one communication as described above. It is of course possible to implement the second embodiment by the structure similar to the first embodiment shown in Fig. 6.

Types of contents 5 are not limited to still pictures of electronic books and magazines as shown in conjunction with the first and second embodiments. For example, voice data, music data and motion picture data are applicable. It is noted that, when contents 5 of multiple kinds are distributed, desirably content reproduction applications corresponding to respective kinds are distributed together.

The flowcharts, functional structures and hardware structures employed in the first and second embodiments are presented just as examples, and they are not limited to those specific examples.

According to the first and second embodiments, each reception apparatus 2 (2A) acquires a content reproduction application by downloading it from distribution apparatus 1 (1A). However, another method may be used for this acquisition. For example, a program or data contained in advance in reception apparatus 2 (2A) may be used as content reproduction application.

Refresh signal RF according to the first and second embodiments is desirably an encrypted signal, if the RF signal is a simple one, produced by using an individual key for each pseudo closed space 4, in order to prevent unauthorized action by users.

The owner of reception apparatus 2 (2A) according to the first and second embodiments may not be users but any facility or establishment corresponding to pseudo closed space 4 that lends reception apparatus 2 (2A) to users.

### Third Embodiment

A third embodiment is hereinafter described.

The process functions heretofore discussed are implemented by means of a program. According to the third embodiment, this program is stored in a computer-readable recording medium.

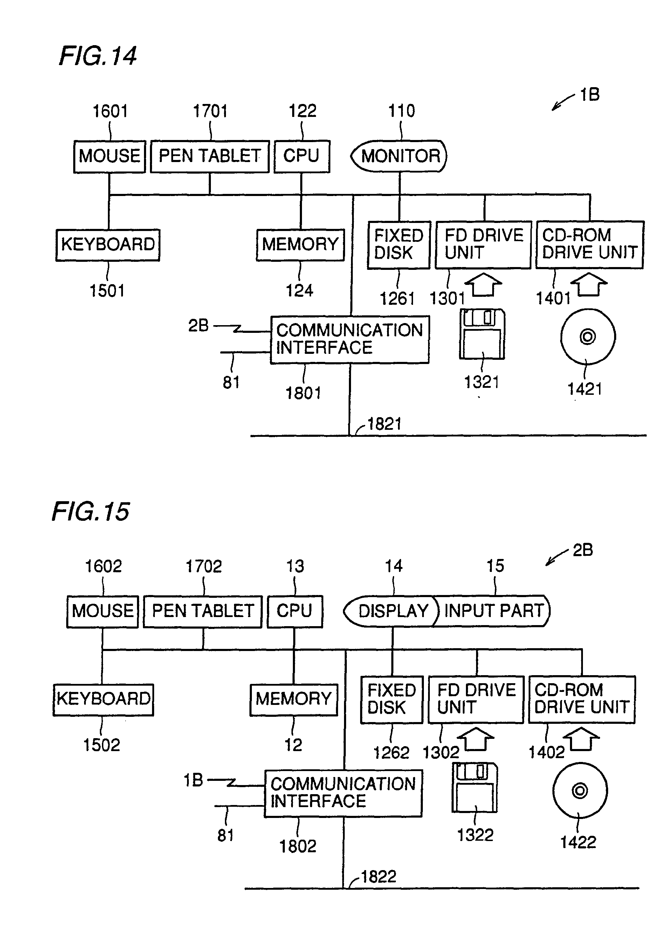

Figs. 14 and 15 show respective structures of a distribution apparatus 1B and a reception apparatus 2B according to the third embodiment. The structure shown of distribution apparatus 1B is also applied to each of distribution apparatuses 1 and 1A of the first and second embodiments, and the structure of reception apparatus 2B is also applied to each of reception apparatuses 2 and 2A of the first and second embodiments.

Referring to Fig. 14, distribution apparatus 1B includes a CPU (central processing unit) 122 for concentrated control of the distribution apparatus itself, a memory 124 structured to include a ROM (read only memory) or RAM (random access memory), a fixed disk 1261, an FD drive unit 1301 having an FD (flexible disk) 1321 removably attached thereto and accessing attached FD 1321, a CD-ROM drive unit 1401 having a CD-ROM (compact disk read only memory) 1421 removably attached thereto and accessing attached CD-ROM 1421, a communication interface 1801 capable of communicably connecting a communication network 1821 and the distribution apparatus, a monitor 110 formed of a CRT (cathode ray tube) or liquid crystal, a keyboard 1501, a mouse 1601, and a pen tablet 1701. These components are communicably connected via a bus. Communication interface 1801 has a function of performing communication with each reception apparatus 2B by means of radio or via a cable 81. Various wired or radio communication networks including the Internet are applicable to communication network 1821.

Distribution apparatus 1B may include a magnetic tape device having a cassette type magnetic tape removably attached thereto and accessing the magnetic tape.

Referring to Fig. 15, reception apparatus 2B includes a CPU 13, a memory 12 structured to include a ROM or RAM, a fixed disk 1262, an FD drive unit 1302 having an FD 1322 removably attached thereto and accessing attached FD 1322, a CD-ROM drive unit 1402 having a CD-ROM 1422 removably attached thereto and accessing attached CD-ROM 1422, a communication interface 1802 capable of communicably connecting a communication network 1822 and the reception apparatus, a display 14, an input part 15, a keyboard 1502, a mouse 1602 and a pen tablet 1702. These components are communicably coupled via a bus. Communication interface 1802 has a function of performing communication with distribution apparatus 1B or communication device 8 by means of radio or wire including cable 81. Various wired or radio communication networks including the Internet are applicable to communication network 1822.

Reception apparatus 2B may include a magnetic tape device having a cassette type magnetic tape removably attached thereto and accessing the magnetic tape.

According to the third embodiment, a medium with a program recorded thereon for implementing process functions according to the first and second embodiments may be the ROMs of memories 124 and 12, the magnetic tape removably set in the magnetic tape device (not shown), FDs 1321 and 1322 removably set in FD drive units 1301 and 1302, CD-ROMs 1421 and 1422 removably set in CD-ROM drive units 1401 and 1402 or the like. In any case, CPUs 122 and 13 may access and execute the program stored on a recording medium. Alternatively, the program may be read from a recording medium and then loaded into a predetermined storage area of distribution apparatus 1B and reception apparatus 2B, and thereafter read and executed by CPUs 122 and 13. A program for this loading is stored in advance in distribution apparatus 1B and reception apparatus 2B.

The program recording medium discussed above may be any in the form of tape such as magnetic tape and cassette tape, in the form of disk for example magnetic disk such as FD 1321 (1322) and fixed disk 1261 (1262), for example optical disk such as MO (magneto-optical disk), MD (mini disk), and DVD (digital versatile disk), in the form of card such as IC card (including memory card) and optical card, or in the form of semiconductor memory such as mask ROM, EPROM (erasable programmable ROM), EEPROM (electrically EPROM), and flash ROM.

The program may externally be downloaded via communication network 1821 to distribution apparatus 1B and via communication network 1822 to reception apparatus 2B and then stored in a predetermined storage area. When the program is downloaded from communication network 1821 or 1822, a program for downloading is stored in advance in the apparatus itself or installed in advance in the apparatus from another recording medium.

Contents stored on the recording medium are not limited to the program and may be data.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A content distribution system comprising at least one content reception apparatus (2, 2A, 2B) receiving and reproducing distributed content (5) and a content distribution apparatus (1, 1A, 1B) distributing said content, wherein
said content distribution apparatus distributes a continuation signal (RF) for enabling said content to be reproduced continuously, and said content reception apparatus is unable to reproduce said content while said content reception apparatus is unable to receive said continuation signal.

2. A content reception apparatus (2, 2A, 2B) receiving and reproducing content (5), wherein
said content reception apparatus is unable to reproduce said received content while said content reception apparatus is unable to receive a continuation signal (RF) for enabling said content to be reproduced continuously.

3. The content reception apparatus according to claim 2, wherein said received content is reproduced according to reproduction procedure information indicating a procedure for reproducing said content.

4. The content reception apparatus according to claim 3, wherein said reproduction procedure information is received together with said content.

5. The content reception apparatus according to claim 2, wherein said continuation signal can be received within a predetermined area (4).

6. The content reception apparatus according to claim 2, wherein
said content reception apparatus comprises information presentation means for receiving and presenting content-specifying information (3061) specifying respective types of said content, and
said content which is designated based on said content-specifying information presented by said information presentation means is requested and received.

7. The content reception apparatus according to claim 6, wherein, when the number of said contents which can be distributed is predetermined for each of said types, said content-specifying information is updated based on type of said content received by said content reception apparatus.

8. The content reception apparatus according to claim 2, wherein said content reception apparatus further comprises means for returning said received content to a distributor (1, 1A, 1B).

9. The content reception apparatus according to claim 8, wherein said content-specifying information is updated based on type of said content returned by said content reception apparatus to said distributor.

10. A content distribution apparatus (1, 1A, 1B) comprising:
content distribution means for distributing content (5); and
continuation signal distribution means for distributing a continuation signal (RE) for enabling said content to be reproduced continuously by a receiver (2, 2A, 2B) of said distributed content.

11. The content distribution apparatus according to claim 10, wherein said content distribution apparatus further comprises means (3061) for managing the number of said distributed contents.

12. The content distribution apparatus according to claim 10, wherein said content distribution apparatus distributes reproduction procedure information indicating a procedure for reproducing said content.

13. The content distribution apparatus according to claim 10, wherein said continuation signal is distributed within a predetermined area (4).

14. The content distribution apparatus according to claim 10, wherein said continuation signal is distributed by means of broadcasting.

15. The content distribution apparatus according to claim 10, wherein said content is distributed by means of broadcasting.

16. The content distribution apparatus according to claim 10, wherein, when said content distribution apparatus receives an acquisition request for acquiring said content as desired, said content distribution apparatus distributes said desired content to a source of said request.

17. A content reception method comprising the steps of:
receiving content (5); and
reproducing said content received in said receiving step, wherein
reproduction of said received content is impossible in said content reproducing step while reception of a continuation signal (RF) for enabling said content to be reproduced continuously is impossible.

18. A content distribution method comprising the steps of:
distributing content (5); and
distributing a continuation signal (RF) for enabling said content to be reproduced continuously by a receiver (2, 2A, 2B) of said distributed content.

19. A machine-readable recording medium having a content reception program recorded thereon for a computer (13) to execute a content reception method for receiving content (5), wherein
said content reception method includes the steps of
receiving said content and
reproducing said content received in said receiving step, and
reproduction of said received content is impossible in said content reproducing step while reception of a continuation signal (RF) for enabling said content to be reproduced continuously is impossible.

20. A machine-readable recording medium having a content distribution program recorded thereon for a computer (122) to execute a content distribution method for distributing content (5), wherein
said content distribution method includes the steps of
distributing said content and
distributing a continuation signal (RF) for enabling said content to be reproduced continuously by a receiver of said content distributed in said distributing step.

21. A program product for a computer (13) to execute a content reception method for receiving content (5), wherein
said content reception method includes the steps of
receiving said content and
reproducing said content received in said receiving step, and
reproduction of said received content is impossible in said content reproducing step while reception of a continuation signal (RF) for enabling said content to be reproduced continuously is impossible.

22. A program product for a computer (122) to execute a content distribution method for distributing content (5), wherein
said content distribution method includes the steps of
distributing said content and
distributing a continuation signal (RF) for enabling said content to be reproduced continuously by a receiver of said content distributed in said distributing step.

23. A content distribution system comprising at least one content reception apparatus (2, 2A, 2B) receiving and reproducing distributed content (5) and a content distribution apparatus (1, 1A, 1B) distributing said content, wherein
said content distribution apparatus distributes a continuation signal (RF) for enabling said content to be reproduced continuously, and said content reception apparatus can reproduce said content while said content reception apparatus can receive said continuation signal.

24. A content reception apparatus (2, 2A, 2B) receiving and reproducing content (5), wherein
said content reception apparatus can reproduce said received content while said content reception apparatus can receive a continuation signal (RF) for enabling said content to be reproduced continuously.
